# EUROPEAN PATENT SPECIFICATION

(11) **EP 3 250 512 B1**
(45) Date of publication and mention of the grant of the patent: **18.11.2026**
(21) Application number: 16701466.1
(22) Date of filing: 22.01.2016
(51) Int. Cl.: C02F 1/00

(54) **LIQUID TREATMENT CARTRIDGE, LIQUID TREATMENT SYSTEM AND METHOD OF PLACING A LIQUID TREATMENT CARTRIDGE IN A CARTRIDGE SEAT**
FLÜSSIGKEITSBEHANDLUNGSKARTUSCHE, FLÜSSIGKEITSBEHANDLUNGSSYSTEM UND VERFAHREN ZUM PLATZIEREN EINER FLÜSSIGKEITSBEHANDLUNGSKARTUSCHE IN EINEM KARTUSCHENSITZ
CARTOUCHE DE TRAITEMENT DE LIQUIDES, SYSTEME DE TRAITEMENT DE LIQUIDES ET PROCEDE DE PLACEMENT D'UNE CARTOUCHE DE TRAITEMENT DE LIQUIDES DANS UN SIEGE DE CARTOUCHE

(30) Priority: 26.01.2015 EP 15152525; 12.06.2015 EP 15171877
(43) Date of publication of application: 06.12.2017
(73) Proprietor: BRITA SE, 65232 Taunusstein (DE)
(72) Inventor: SCHULER, Tobias, 63303 Dreieich (DE); HOTHER, Stefan, 65197 Wiesbaden (DE); ZIECHNER, Eike, 61273 Wehrheim (DE); HORN, Marcus, 65207 Wiesbaden (DE); HAGEN, Thomas, 55122 Mainz (DE); BLANK, Mario, 59846 Sundern (DE)
(74) Representative: Meissner Bolte Düsseldorf Patentanwälte Rechtsanwälte Partnerschaft mbB
(86) International application number: PCT/EP2016/051361
(87) International publication number: WO 2016/120173

(56) References cited:
- EP-A1- 0 823 276
- EP-A1- 1 510 503
- EP-A1- 2 583 731
- WO-A1-2010/034735
- WO-A1-2010/115970
- CA-A1- 2 230 436
- DE-A1- 102009 000 231
- US-A1- 2007 227 955
- US-A1- 2008 277 327

## Description

The invention relates to a liquid treatment cartridge including a housing of which at least a part is insertable into a cartridge seat through a mouth of the cartridge seat,
wherein the housing has an axis corresponding to an intended direction of insertion of at least part of the housing into the cartridge seat
wherein an axially leading section of the housing has a side wall including a respective member of each of at least one pair of a guide groove and a set of at least one protrusion receivable in the guide groove during insertion of the liquid treatment cartridge into a cartridge seat having a side wall extending mainly in axial direction and including the other member of each pair,
wherein the housing includes a circumferential sealing rim axially at a distance to the members of the at least one pair with which the side wall is provided,
wherein the sealing rim includes a section protruding outwards from a remainder of the housing and a further section protruding in a mainly axial direction from an axially leading side of the section protruding outwards,
wherein the further section is flexible inwards on contact with a sealing surface of the cartridge seat to conform to the sealing surface of the cartridge seat, and
wherein an outward-facing surface of at least the further section of the sealing rim is unifacial.

The invention also relates to a liquid treatment system.

The invention also relates to a method of placing a liquid treatment cartridge in a cartridge seat.

US 2007/0227955 A1 discloses a filter cartridge having a base wall in which the cartridge has an indentation in which a mandrel, which extends vertically downwards, is formed integrally. A cartridge upper part has a securing flange extending radially outwards and an integral hinge, via which a snap-action rim is attached in a jointed fashion. The snap-action rim is formed by a flat edge strip directed radially outwards.

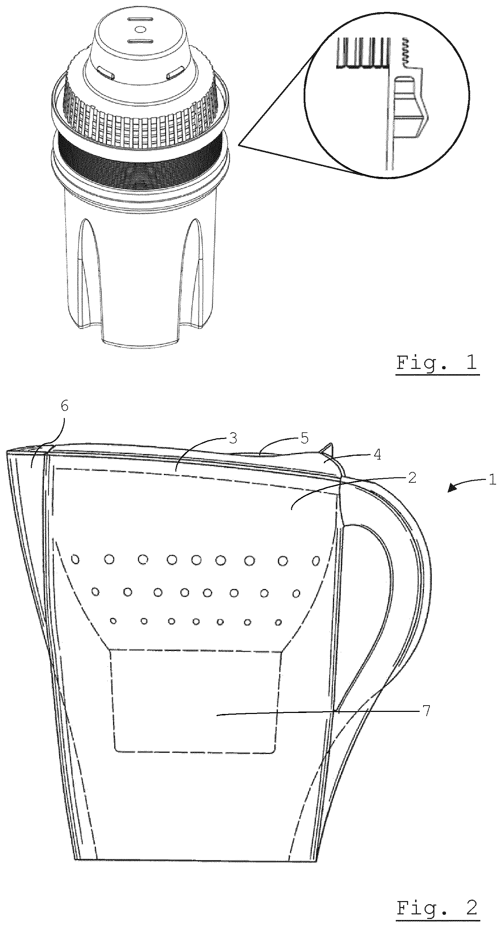

A liquid treatment cartridge for a gravity-driven water filter jug has been offered for sale on-line at http://www.tesco.com/direct/tesco-water-filter-cartridge-single/320-4151.prd?pageLevel=&skuId=320-4151, accessed on 13 April 2015. Such a cartridge is illustrated in Fig. 1. The cartridge is for use in a jug with a funnel or hopper having a cartridge seat compatible with so-called BRITA classic cartridges. These seats have a slightly conical side wall from which a blade-shaped obstruction protrudes radially inwards. As shown in Fig. 1, the cartridge has four recesses in its side wall, any one of which can receive the blade over at least some of its length to enable the cartridge to be inserted far enough into the cartridge seat without touching the blade-shaped obstruction. The four grooves are wider and deeper near the bottom end of the cartridge and taper towards their opposite ends. They do not conform to the shape of the blade-shaped obstruction and thus play no role in guiding the cartridge as it is inserted. The cartridge has a sealing rim, shown in detailed cross-section in Fig. 1. As can be seen, it comprises a flange-shaped section protruding radially with respect to an upright body axis (not shown) of the cartridge housing. A section depends from the radially protruding section at its radially outer end. This depending section has a generally cylindrical sub-section followed by a generally conical sub-section flaring radially outwards and then a generally conical sub-section angled inwards. Due to its radially inwards inclination, this latter section is able to guide the cartridge by co-operating with the mouth of the cartridge seat, so that the cartridge is axially aligned with an upright cartridge seat axis. The alignment ensures that the sealing rim seals off the mouth of the cartridge seat to prevent a bypass of liquid between the inserted cartridge and the side wall of the cartridge seat. The depending section of the sealing rim is pressed radially inwards when the cartridge is inserted into the seat. The force maintaining the seal is due to the elastic deformation of this depending section of the sealing rim.

A problem of the known cartridge is that the shape of the depending section of the sealing rim is relatively difficult to achieve by injection-moulding. A split mould or slide tool may be required, for example.

CA 2,230,436 A discloses a cartridge for a water purification device comprising a jug which has a pouring spout and a funnel with a funnel tube pointing downwardly into the jug. The cartridge has releasable sealing means for preventing water from passing between the cartridge and the funnel tube. The cartridge has an imaginary first longitudinal line on the periphery of the cartridge, which may be aligned with an imaginary second longitudinal line on the funnel tube, the second imaginary line being closest to the spout. The cartridge comprises a container that has an outer shell with a side wall and a bottom and an inner shell with a side wall and a bottom. The container is for holding a water purification medium. The container and jug have means to align the first and second imaginary lines together. In an embodiment, there are from two to six outer grooves equidistantly spaced around the outer shell. When the alignment means is a groove and a cooperating projection, preferably the longitudinal groove extends from the closed bottom end of the container at least part way up the side wall into an upper portion of the cartridge. The groove is preferably wider and deeper near to the closed bottom end of the container and preferably tapers uniformly to be less wide and less deep with increased distance up the side wall. The inside surface of the funnel tube preferably has a fin-like longitudinal projection extending inwardly, from the open bottom end of the funnel tube at least part way up the side wall. The fin-like projection aids in defining the correct radial alignment of a partial dome of the inner shell to the funnel and purification jug.

It is a first object of the invention to provide a liquid treatment cartridge, liquid treatment system and method of the types mentioned above in the opening paragraphs that allow the cartridge to seal the mouth of the cartridge seat adequately and be relatively uncomplicated to manufacture.

The first object is achieved according to a first aspect by the liquid treatment cartridge according to the invention, which is defined in claim 1.
gate shape along a principal longitudinal axis. It comprises a casing in which there is a filter bed of conventional composition, such as a mixture of activated carbon granules, ion-exchange resins, salt additives, etc. The casing comprises an upper portion in which a plurality of inlet openings are formed for admitting the liquid to be filtered and a lower portion having a base with two or more apertures for the outflow of the filtered liquid, arranged in mutually spaced-apart positions and juxtaposed along the longitudinal axis of the cartridge. The casing has a side wall which delimits the lower portion as far as the base.

In practice, the lower and upper portions of such cartridges are manufactured separately by injection-moulding. The lower portion is filled with the filter bed and then closed by the upper portion, often at a separate location, sometimes by a different entity from the one manufacturing the casing portions. The casing portions are transported to the filling location in stacks. At the filling location, the casing portions are taken one-by-one from the stack.

Imperfect stacking may lead to the individual casing portions' becoming stuck in the stack, thus disrupting the filling and assembly process.

WO 2010/034735 A1 discloses a cartridge for a percolating filtering device for filtering water for domestic use. The cartridge comprises a container, which is for the filtering material and which is of elongate form when viewed from above.

It is an object underlying an independent, second aspect of the invention to provide a housing part of the type mentioned above in the opening paragraphs that is relatively well-suited to being stacked.

The first object is achieved according to a first aspect by the liquid treatment cartridge according to the invention, which is characterised in that the outward-facing surface is inclined with respect to the axis such as to flare outwards towards an edge thereof distal to the section from which the further section protrudes.

Being unifacial, at least the further section of the sealing rim has but one principal or specialised outward-facing surface. There are no facets to this surface. The inclination of tangents to the surface in a cross-sectional plane parallel to the axis and to the direction in which the first section protrudes outwards from the housing varies at most continuously along the surface to a point at the leading edge of the section protruding in the mainly axial direction. Increased flexing is achieved with one essentially uniform inclination. The point at the leading edge up to which the inclination varies continuously or is constant will correspond to the leading edge or be just short of the leading edge if the leading edge is rounded or chamfered. In any case, the tangent will have a continuously varying or constant inclination over the majority of the surface, e.g. over 90 or even 95 % of its extent. In the case of a cartridge with a generally circle-cylindrical cross-section, the surface will be circle-cylindrical or frustoconical in shape.

Because the further section protrudes from an axially leading side of the section protruding outwards, the section protruding outwards can be relatively stiff. The further section can still flex over a relatively large distance, because the section protruding outwards is not between it and the co-operating sealing surface of the cartridge seat. Because the outward-facing surface of the further section is unifacial, the function of axially aligning or centring the cartridge with respect to the cartridge seat is assumed only by the guide grooves and protrusions receivable therein. A mould for forming the sealing rim is easier to form, since only the surface for forming the unifacial outer surface need be machined in the mould. Because it is the side wall rather than an axial end wall (e.g. a bottom wall) of the cartridge housing that includes a respective member of each of at least one pair of a guide groove and a set of at least one protrusion receivable in the guide groove during insertion of the liquid treatment cartridge in the cartridge seat, the tolerances of these alignment parts are less critical. They are located relatively far away from the central axis.

The housing has at least one liquid-permeable window forming an inlet and at least one liquid-permeable window forming an outlet, with the sealing rim separating the inlet(s) from the outlet(s). The housing defines at least one chamber in which a liquid treatment part, for example a liquid treatment part including a bed of granular liquid treatment medium or media retained in the chamber, is arranged. When the seal is established, liquid is forced to flow through the cartridge seat only via the chamber, so that the liquid is treated.

Because the outward-facing surface is inclined with respect to the axis such as to flare outwards towards an edge thereof distal to the section from which the further section protrudes, the further section can flex relatively far before the outward-facing surface conforms to the sealing surface of the cartridge seat. The latter will generally be conical and taper in the other direction. The angle of inclination of the outward-facing surface may have a value in the range of 0-15°, e.g. 0-10° or even 0-5°, but larger than 0.5°, e.g. larger than 1°.

It is observed that the term seat does not necessarily imply that the axially leading end of the cartridge is the lower end. The cartridge may be inserted from below into a downward-facing cartridge seat.

In an embodiment of the liquid treatment cartridge, the further section is provided at an outer edge of the section protruding outwards, such that the outward-facing surface of the further section transitions into an end face of the section protruding outwards.

The section protruding outwards is relatively stiff. It is oriented in a direction perpendicular to the axis. The further section on the other hand should flex inwards on contact with the sealing surface, preferably over a relatively large distance. By providing the further section at an outer edge of the section protruding outwards, the distance over which the part of the further section distal to the section protruding outwards can flex is made relatively large. In general, the sealing surface will be slightly conical. By avoiding an "overhang" of the relatively stiff section protruding outwards, the cartridge can be advanced over a relatively large distance axially into the cartridge seat, with the further section flexing in the process to conform to the shape of the sealing surface.

In an embodiment of the liquid treatment cartridge, the outward-facing surface of the sealing rim is unifacial.

In this embodiment, the entire sealing rim is easier to manufacture, in particular mould using a relatively simple mould. There is no need to mill separate surfaces in the mould very accurately. In any cross-sectional plane perpendicular to the sealing rim and parallel to or through the axis, the inclination of tangents to the outward-facing surface varies continuously along the outward-facing surface or is constant between points at or near the edges of the outward-facing surface. A constant inclination is simplest.

In an embodiment of the liquid treatment cartridge, the sealing rim is provided at an axial end of a housing part.

This simplifies demoulding. The outwardly protruding section forms a flange of the housing part. The housing part terminates at one axial end in the sealing rim. Even if another further section protrudes in a mainly axial direction from an axially trailing side of the section protruding outwards, only one of the further sections surrounds the housing side wall.

In an embodiment, the sealing rim includes a section protruding in a mainly axial direction from an axially trailing side of the section protruding outwards.

Where the cartridge is inserted downwards into the cartridge seat, the section protruding in a mainly axial direction from an axially trailing side of the section protruding outwards will form an upstanding ridge. Together with the section protruding outwards, a gutter for collecting liquid is defined. Even if the cartridge is inserted into the cartridge seat the other way up, the section protruding in a mainly axial direction from an axially trailing side of the section protruding outwards can serve to align a further housing part with the housing part provided with the sealing rim, so that the section protruding outwards can function as a flange for joining the housing part to the further housing part.

Thus, in an embodiment, the section protruding outwards forms a flange of a first housing part and the housing includes a second housing part, provided with a flange and joined to the first housing part at the flanges.

The flanges provide a relatively large and stable contact surface, useful e.g. for welding or adhesive bonding. The flange of the second housing part reinforces the section of the sealing rim protruding outwards, but not the further section protruding mainly in axial direction. The latter section can thus remain relatively flexible.

In an embodiment, an inward-facing surface of the further section includes at least a section at an edge distal to the section from which the further section protrudes that is inclined with respect to the axis such as to flare outwards towards the distal edge.

This makes de-moulding easier to accomplish when the housing part including the sealing rim is injection-moulded. The space between the further section and the remainder of the housing from which the section protruding outwards protrudes increases towards the edge of the further section distal to the section protruding outwards. Also, the further section becomes thinner towards the distal edge, facilitating flexing thereof and its conformation to the co-operating surface of the cartridge seat.

At least the axially leading section of the housing has an elongated cross-section in a cross-sectional plane perpendicular to the axis.

Cartridges for a gravity-driven liquid treatment system should be suitable for systems comprising a jug placeable in a door of a household refrigerator and/or making efficient use of shelf space in a cupboard. The housing of the liquid treatment cartridge is generally oval in shape with (short) sides having a relatively small radius of curvature at either end of a major axis and (long) sides with no curvature or a relatively large radius of curvature at either end of a minor axis. The perimeter of the sealing rim is of a similar shape. The cartridge seat can thus also have such a shape, as can a funnel or hopper provided with the cartridge seat and suspended in a vessel such as a jug. Compared to a vessel with a circle-cylindrical shape, more efficient use is made of cupboard shelf space and more volume is available in a vessel designed to fit a compartment in a door of a typical household refrigerator.

At least one of sides of the housing corresponding to narrow ends of the elongated shape is provided with the member of at least one of the pairs.

The side wall is generally a side wall of a vessel-shaped housing part. When such a part is manufactured by injection-moulding, the narrow ends are more stable and less prone to warping. The length of such a part (the dimension in the direction of the major axis of the elongated shape) can be controlled more accurately than the width. The member can thus be positioned and dimensioned relatively accurately when positioned at the narrow end.

In an embodiment, the side wall is provided with an, e.g. outwards, bulge on at least one longer side of the housing.

This stiffens the longer sides of the housing by reinforcing the side wall there.

In an embodiment of the liquid treatment cartridge, the housing is provided with the guide groove of at least one, e.g. each, of the pairs.

Protrusions could damage foil packaging of the cartridge and lead to an increase in its dimensions or a reduction of its volume for given dimensions if the housing were to be provided with the protrusions of the pairs.

In a variant of this embodiment, the guide groove is formed as an indentation in the side wall.

The side wall can thus be relatively thin, saving on material. The indentation reinforces the side wall. It also results in a bulge on the inside of the housing part provide with the guide groove, which bulge can support a next-higher housing part in a stack of similar housing parts.

In a variant of this embodiment, a rib is provided on an inside surface of the side wall, the rib extending in axial direction towards an axially trailing end of the side wall and being aligned with the indentation.

The rib can enter the groove of a next-higher housing part in a stack of similar housing parts. This leads to a relatively straight stack from which the housing parts can be taken individually with little risk of being stuck in the next-lower housing part due to imperfect alignment.

In an embodiment of the liquid treatment cartridge, a plane through the axis and cutting at least a housing part including the side wall in two halves intersects the side wall at opposite locations, a member of a first of the pairs is provided at a position offset with respect to one of the locations to one side of the plane and a member of a second of the pairs is provided at a position offset with respect to one of the locations to an opposite side of the plane.

This improves the prevention of tilt, in particular also when the housing part provided with the side wall is placed in a stack of similar housing parts. It also provides better alignment where the protrusion or protrusions do not fit into the guide groove relatively tightly.

In a variant of this embodiment, the member of the first of the pairs is provided at a position offset with respect to a first of the locations and the member of the second of the pairs is provided at a position offset with respect to a second of the locations.

This helps prevent tilt in either of two mutually perpendicular directions, e.g. corresponding to the long and short axes where at least the axially leading section of the housing has an elongated cross-section in a cross-sectional plane perpendicular to the axis corresponding to the direction of insertion.

In a variant of this particular variant, the side wall includes respective members of a third and a fourth of the pairs, and the member of the third pair is arranged symmetrically with respect to the member of the first pair and the member of the fourth pair is arranged symmetrically with respect to the member of the second pair, with the plane forming a plane of symmetry.

When the housing part including the side wall is manufactured by injection-moulding, the symmetry results in better filling of the mould and a reduced risk of warping or distortion.

In an embodiment of the liquid treatment cartridge, a wall at an axially leading end of the housing includes an indentation forming a recess with respect to a surrounding section of an outer surface of the wall.

This embodiment is suitable for use with a cartridge seat having a cartridge seat chamber for receiving at least a section of the liquid treatment cartridge, wherein a hollow part protrudes from an end wall of the cartridge seat chamber and defines a passage through the end wall. Such a protruding part is received in the recess when the liquid treatment cartridge is placed in the cartridge seat. The protruding part ensures that the cartridge seat chamber is not completely emptied of liquid. This allows at least an end section of liquid treatment cartridge to remain submerged in liquid, e.g. so that oligodynamic substances can continue to function and/or swollen liquid treatment media do not dry out and shrink.

In a variant of this embodiment, the housing includes a protrusion protruding into the recess in a mainly axial direction.

The protrusion can serve to throttle the flow of liquid out of the cartridge and cartridge seat. It may also engage the cartridge seat to provide a further axially directed force holding the liquid treatment cartridge in the cartridge seat.

The pairs of a guide groove and a set of at least one protrusion receivable in the guide groove help align the protrusion with the part of the cartridge seat with which it interacts when the liquid treatment cartridge is placed in the cartridge seat.

In an embodiment of the liquid treatment cartridge, the housing is provided with a part other than the sealing rim for engaging the cartridge seat to exert an axial holding force on the cartridge when inserted into the seat.

The sealing rim is thus held in sealing engagement with the sealing surface.

In a variant of this embodiment, the part for exerting an axial holding force is centred with respect to an axis that is at least parallel to the cartridge axis and with respect to which the sealing rim is centred.

The force with which the sealing rim is held against the sealing surface can thus be relatively uniform along the circumference of the sealing rim.

In a variant of the embodiment in which the housing includes a protrusion protruding into the recess in a mainly axial direction and the housing is provided with a part other than the sealing rim for engaging the cartridge seat to exert an axial holding force on the cartridge when inserted into the seat, the protrusion is a hollow part, open at an axially leading end and provided with at least one protruding part on an interior surface.

The protruding part on an interior surface can provide a shape lock so that the axially directed holding force is not due only to friction.

There is also disclosed herein a housing part for a housing of a liquid treatment cartridge, e.g. a liquid treatment cartridge according to the invention, which is characterised in that at least one side of the housing part corresponding to a narrow end of the elongated shape includes a respective externally accessible member of each of at least one pair of a guide groove and a set of at least one protrusion receivable in the guide groove during insertion of at least part of the liquid treatment cartridge housing into the cartridge seat and a part on an opposite interior side of the side wall to the externally accessible member for engaging the externally accessible member of a further housing part with a corresponding shape when the housing parts are stacked.

Because of the placement at the narrow end, the part on an opposite interior side of the side wall to the externally accessible member does not further narrow the narrowest part of the interior of the cartridge housing. Moreover, it is placed at the end of which the dimensions and shape can be controlled relatively accurately if the housing part is made by injection-moulding.

In an embodiment, the elongated shape is N-fold rotationally symmetric, wherein N is a multiple of two, and, for each of the respective members, a corresponding member of the same shape of another pair is provided at a position separated by half the circumference of the side wall.

When the housing part is incorporated into the housing, the liquid treatment cartridge can be rotated over 180° and still be inserted into the cartridge seat. Similarly, when the housing part is placed in a stack of similar housing parts, it can have either of two orientations separated by 180°.

In an embodiment, externally accessible members and opposite parts on an interior side of the side wall of at least two of the pairs are provided on at least one side of the housing part corresponding to a narrow end of the elongated shape, e.g. at positions offset in opposite directions with respect to a plane at least one of parallel to and through the axis cutting the housing part into two halves.

This improves the prevention of tilt, even if the opposite parts do not fit the externally accessible members tightly.

In an embodiment, the part on the interior side includes a part offset in axial direction with respect to the externally accessible member on the opposite side of the side wall.

This takes account of the fact that the housing part does not sink all the way down into the housing part below it in a stack of similar housing parts.

In an embodiment of the housing part, the side wall is provided with an, e.g. outwards, bulge on at least one longer side of the housing part.

This stiffens the longer sides of the housing part by reinforcing the side wall there.

In an embodiment of the housing part, the externally accessible member of at least one, e.g. each, of the pairs, is the guide groove.

Protrusions could damage foil packaging of the cartridge and lead to an increase in its dimensions or a reduction of its volume for given dimensions if the housing were to be provided with the protrusions of the pairs.

In a variant of this embodiment, the guide groove is formed as an indentation in the side wall.

The side wall can thus be relatively thin, saving on material. The indentation reinforces the side wall. It also results in a bulge on the inside of the housing part provide with the guide groove, which bulge can support a next-higher housing part in a stack of similar housing parts.

In an embodiment, a wall at an axially leading end of the housing part includes an indentation forming a recess with respect to a surrounding section of an outer surface of the wall.

This embodiment is suitable for use with a cartridge seat having a cartridge seat chamber for receiving at least a section of the liquid treatment cartridge, wherein a hollow part protrudes from an end wall of the cartridge seat chamber and defines a passage through the end wall. Such a protruding part is received in the recess when the liquid treatment cartridge is placed in the cartridge seat. The protruding part ensures that the cartridge seat chamber is not completely emptied of liquid. This allows at least an end section of the liquid treatment cartridge to remain submerged in liquid, e.g. so that oligodynamic substances can continue to function and/or swollen liquid treatment media do not dry out and shrink. The indentation may be centred on the axis where it is a body axis of the housing part, so that the parts on the interior side of the side wall, being at the narrow ends of the housing part, are situated relatively far apart from the indentation protruding into the interior of the housing part.

In a variant of this embodiment, the housing part includes a protrusion protruding into the recess in a mainly axial direction.

The protrusion can serve to throttle the flow of liquid out of the cartridge and cartridge seat. It may also engage the cartridge seat to provide a further axially directed force holding the liquid treatment cartridge in the cartridge seat. The pairs of a guide groove and a set of at least one protrusion receivable in the guide groove help align the protrusion with the part of the cartridge seat with which it interacts when the liquid treatment cartridge having a housing including the housing part is placed in the cartridge seat.

In a particular variant of this variant, the protrusion is a hollow part, open at an axially leading end and provided with at least one protruding part on an interior surface.

The protruding part on an interior surface can provide a shape lock so that the axially directed holding force is not due only to friction.

There is also disclosed herein a liquid treatment cartridge including a housing including a housing part as defined above. The liquid treatment cartridge may include any of the features of the liquid treatment cartridge addressing the first object of the invention.

According to another aspect, the liquid treatment system addressing the first object underlying the invention includes a replaceable liquid treatment cartridge according to the invention, and is characterised in that the members of the pairs are configured to avoid that the sealing rim aligns the cartridge axis and the cartridge seat axis.

There is thus a separation of functions. The sealing rim serves only to seal the mouth of the cartridge seat through which at least part of the liquid treatment cartridge is inserted. The members of the pairs take care of the alignment of the cartridge axis and the cartridge seat axis and thus ensure uniform sealing. They ensure that the cartridge axis and the cartridge seat axis are already aligned before the sealing rim can engage the sealing surface. This is because one of the members of each pair is provided on a side wall of an axially leading section of the housing of the liquid treatment cartridge, which is thus inserted into the cartridge seat first. The sealing rim can therefore not fulfil the alignment function.

In an embodiment of the liquid treatment system, the cartridge seat is provided with the set of at least one protrusion of at least one, e.g. each, of the pairs.

The liquid treatment cartridge is thus provided with the guide groove. Less material is required for the cartridge housing and the cartridge housing can have relatively few or no protruding parts that might damage packaging or be damaged themselves in transit. Extra material in the cartridge seat is less objectionable, because the cartridge seat is intended for use over a longer period of time than a liquid treatment cartridge.

In the liquid treatment system, the set of at least one protrusion of each of the pairs includes a rib extending mainly in axial direction.

Compared to a set of multiple protrusions aligned in axial direction, a rib is simpler to form. Furthermore, it contacts the groove along its length to provide more points of contact. Moreover, it does so upon insertion into the guide groove.

In an embodiment of the liquid treatment system, wherein the cartridge seat includes a mouth through which at least part of the cartridge housing is insertable into the cartridge seat and a side wall extending in mainly axial direction from the mouth, the side wall includes the members of the pairs with which the cartridge seat is provided.

The guide pair members are thus provided at an axial distance to the mouth, allowing for more accurate alignment for a given precision with which they are positioned and dimensioned. Also, the side wall can provide the sealing surface.

In a variant of this embodiment, the cartridge seat includes a cartridge seat chamber for receiving the part of the cartridge housing inserted into the cartridge seat, and the side wall corresponds to a side wall of the cartridge seat chamber and adjoins an axial end wall of the cartridge seat chamber opposite the mouth.

The chamber can be closed off to prevent a passage of liquid in the absence of a correctly positioned liquid treatment cartridge if provided with a suitable valve. Even without such a valve, the chamber can allow at least an axially leading end of the liquid treatment cartridge to remain submerged in liquid even if the reservoir is empty, thus preventing at least this section from drying out when not used to treat liquid. This may be of use where the liquid treatment cartridge includes a liquid treatment medium that swells on contact with liquid or where the liquid treatment cartridge includes an amount of an oligodynamic substance.

In a particular variant of this variant, the cartridge seat includes a valve for at least restricting a flow of liquid out of the cartridge seat chamber, which valve is operable by the liquid treatment cartridge to increase the flow of liquid on insertion of the liquid treatment cartridge into the cartridge seat.

The valve may restrict the flow of liquid to the point where essentially no liquid flows out of the cartridge seat chamber at all. The cartridge seat will generally be included in a barrier for separating an upstream section of a liquid treatment system from a downstream section. Where the valve closes completely, untreated liquid cannot reach the downstream section. Where it restricts the flow of liquid to allow it to flow at only a very low rate, this provides a signal to a user that an inserted liquid treatment cartridge is not of the correct type or has not been inserted correctly.

In an embodiment of the liquid treatment system in which the cartridge seat includes a cartridge seat chamber for receiving the part of the cartridge housing inserted into the cartridge seat and the side wall corresponds to a side wall of the cartridge seat chamber and adjoins an axial end wall of the cartridge seat chamber opposite the mouth, the cartridge seat includes a hollow part protruding into the cartridge seat chamber with respect to a surrounding section of the axial end wall, and a passage for liquid through the axial end wall is provided in the hollow protruding part.

In an upright orientation with the cartridge seat axis arranged essentially vertically, the mouth of the cartridge seat can be at a higher level than the axial end wall. The protruding hollow part functions to keep a certain level of liquid in the cartridge chamber even if the liquid treatment system including the cartridge seat is not being used. Liquid will surround the hollow protruding part up to the level of an opening into the passage. Any other passages through the axial end wall will be closed. Any passages through the side wall will be at an axial position further removed from the axial end wall than the opening(s) into the passage through the hollow protruding part.

In a variant of this embodiment, the hollow protruding part has an opening at an end distal to the surrounding section of the axial end wall for receiving a protrusion of the cartridge housing such as to define at least one passage for liquid between the protrusion and the hollow protruding part.

The flow of liquid is thus throttled to an intended degree, such that the area of the passage for liquid determines the rate of flow through the liquid treatment cartridge and cartridge seat. The protrusion of the cartridge housing and the opening into the hollow protruding part can be a relatively tight fit, because the pair or pairs of a guide groove and a set of at least one protrusion receivable in the guide groove ensure that the cartridge axis is aligned with the cartridge seat axis during insertion of the liquid treatment cartridge into the cartridge seat.

In the liquid treatment system, the cartridge seat includes a mouth through which at least part of the cartridge housing is insertable into the cartridge seat, wherein the mouth has an elongated shape.

The mouth may, for example, have an oval shape. The remainder of the cartridge seat, e.g. a cartridge seat chamber for receiving at least part of a liquid treatment cartridge inserted through the mouth, may have a similar elongated shape. This type of cartridge seat is suitable for incorporation into the funnel or hopper of a gravity-driven liquid treatment system for household use. It makes economical use of shelf space in a cupboard and can be dimensioned to fit a compartment in a door of a household refrigerator without sacrificing liquid treatment or storage capacity.

The members of the pairs with which the cartridge seat is provided are provided on at least one of, e.g. both of, sides of the cartridge seat corresponding to narrow ends of the elongated shape.

Where the housing of the liquid treatment cartridge and the cartridge seat are manufactured by injection-moulding, the narrow ends can be dimensioned more accurately, as they are more stable. If the cartridge seat includes a chamber with a hollow protruding part protruding with respect to a surrounding section of an axial end wall, such a part will generally be at the centre. The distance between the pair members and the hollow protruding part is largest when the pair members are provided on sides of the cartridge seat corresponding to narrow ends of the elongated shape.

In a particular variant of this variant, at least one of the sides of the cartridge seat corresponding to the narrow ends is provided with the members of at least two of the pairs, e.g. members offset in opposite directions with respect to a plane at least one of parallel to and through the cartridge seat axis and cutting the shape in two halves.

Compared with a single member, the alignment can be more accurate even if the protrusions are not a tight fit in the guide grooves. Where the members are offset in opposite directions, in particular by an equal distance, symmetry is provided. This is helpful in preventing warpage where parts of the cartridge seat and liquid treatment cartridge including the pair members are manufactured by injection-moulding.

In an embodiment of the liquid treatment system, the barrier includes a reservoir for liquid to be treated.

The reservoir may be a tank or a funnel or hopper. This embodiment is suitable for implementing a gravity-driven liquid treatment system or one employing a suction pump and a liquid treatment cartridge at a bottom of the reservoir. The system is relatively compact, and the liquid treatment cartridge is relatively accessible for replacement.

An embodiment of the liquid treatment system includes a vessel for collecting treated liquid, wherein the barrier is arranged to be suspended in the vessel.

This is a relatively compact implementation of a gravity-driven liquid treatment system.

According to another aspect, the first object underlying the invention is also achieved with a method of placing a liquid treatment cartridge according to the invention in a cartridge seat, which method is characterised by using the pairs of a guide groove and a set of at least one protrusion receivable in the guide groove instead of the sealing rim to align the cartridge axis and the cartridge seat axis.

In an embodiment of the method, the liquid treatment system is a liquid treatment system according to the invention.

The invention will be explained in further detail with reference to the accompanying drawings, in which:
- Fig. 1: is a perspective view of a prior art cartridge with an enlarged cross-sectional view of its sealing rim;
- Fig. 2: is a plan view of a gravity-driven liquid treatment system;
- Fig. 3: is a plan cross-sectional view of a cartridge seat of the liquid treatment system;
- Fig. 4: is a top plan view of the cartridge seat of Fig. 3;
- Fig. 5: is a perspective view of the cartridge seat of Figs. 3 and 4 with part of its side wall cut away to show its interior;
- Fig. 6: is a cross-sectional view of a valve mechanism included in the cartridge seat;
- Fig. 7: is a perspective view of a liquid treatment cartridge for placement in the cartridge seat of Figs. 3-5;
- Fig. 8: is a perspective view of a vessel-shaped part of a housing of the liquid treatment cartridge of Fig. 7;
- Fig. 9: is a top view of the vessel-shaped housing part of Fig. 8;
- Fig. 10: is a cross-sectional view from the top of the vessel-shaped housing part of Figs. 8 and 9;
- Fig. 11: is a perspective view of the vessel-shaped housing part of Figs. 8-10 with part of its side wall cut away to show its interior;
- Fig. 12: is a first cross-sectional view of the inside of the vessel-shaped housing part of Figs. 8-11;
- Fig. 13: is a second cross-sectional view of the inside of the vessel-shaped housing part of Figs. 8-12; and
- Fig. 14: is a detailed cross-sectional view of the sealing rim further showing a flange of a cap-shaped part of the housing of the liquid treatment cartridge.

A gravity-driven liquid treatment system comprises a vessel for collecting treated liquid, in the illustrated example in the form of a jug 1 (Fig. 2) suitable for placement in the door of a household refrigerator. Alternative types of vessel include carafes and bottles. The liquid may be an aqueous liquid, e.g. mains drinking water. A reservoir 2 in the shape of a funnel or hopper is suspended in the jug 1. To this end, the reservoir 2 is provided with an external ridge 3 running around most of its circumference. The reservoir ridge 3 is supported by a ledge on the inside of a side wall of the jug 1, which ledge is situated at the mouth of the jug 1. The jug 1 with the reservoir 2 suspended therein is closed by a lid 4 in which a fill opening is defined. The fill opening is closed by a closure element 5. The reservoir 2 is situated adjacent a pouring spout 6, so that the reservoir 2 need not be removed during use.

The reservoir 2 functions as a barrier to separate treated liquid from treated liquid collected in the jug 1. The reservoir 2 is provided with a cartridge seat including a cartridge seat chamber defined in an appendage 7 to the reservoir 2. The appendage 7 is an integral part of the reservoir 2. The reservoir 2 is made of plastic and is generally obtainable by injection-moulding.

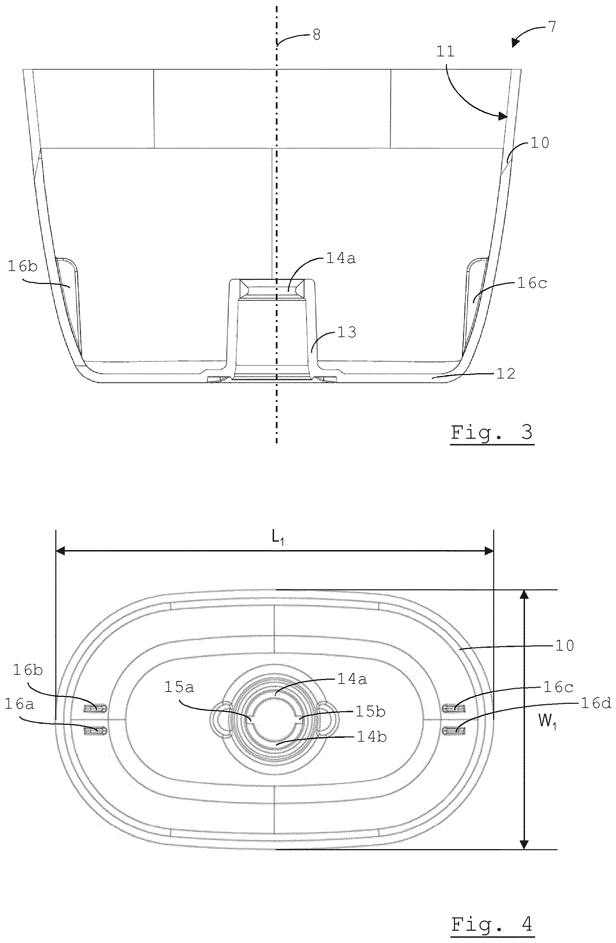

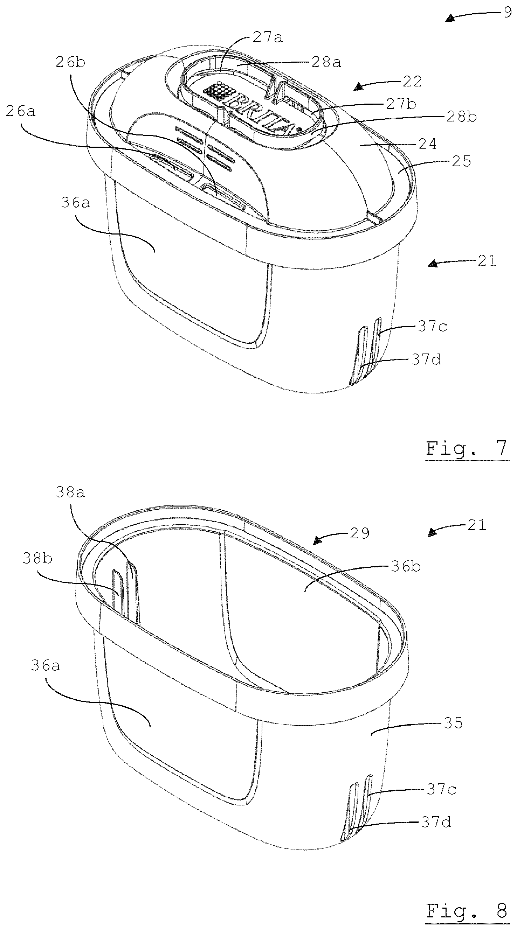

An, in use upright, cartridge seat axis 8 can be defined as a reference axis (Fig. 3). The cartridge seat chamber has a mouth at one axial end through which at least part of a liquid treatment cartridge 9 (Fig. 7) is insertable. In the illustrated embodiment, the mouth is at the upper end of the cartridge seat chamber. Seen from above in axial direction, the mouth is of the cartridge seat chamber has an elongated, rounded shape with a width W₁ and a length L₁. The same is true for the outline of the cartridge seat chamber in any cross-section perpendicular to the cartridge seat axis 8.

The cartridge seat chamber is in part defined by a cartridge seat chamber side wall 10 (Figs. 3-5), closed on itself around the cartridge seat axis 8. An upper section of an inside surface of the cartridge seat chamber side wall 10 forms a sealing surface 11. The sealing surface is slightly inclined with respect to the cartridge seat axis 8, so as to widen towards the mouth of the cartridge seat chamber. It may be parallel to the cartridge seat axis in an alternative embodiment.

The cartridge seat chamber side wall 10 adjoins a cartridge seat chamber bottom wall 12 located at an opposite axial end to the mouth of the cartridge seat chamber. The cartridge seat chamber bottom wall 12 is provided with a hollow protruding part 13 that protrudes into the cartridge seat chamber with respect to a surrounding section of the cartridge seat chamber bottom wall 12. The cartridge seat chamber side wall 10, cartridge seat chamber bottom wall 12 and the hollow protruding part 13 are integral parts of the reservoir 2 in the illustrated embodiment. The hollow protruding part 13 and/or the cartridge seat chamber bottom wall 12 may be separate parts joined to the reservoir 2 in an alternative embodiment.

The hollow protruding part 13 defines a liquid channel having an opening at an axial end distal to the surrounding section of the cartridge seat chamber bottom wall 12. An opening at an opposite axial end forms an aperture in the cartridge seat chamber bottom wall 12 through which liquid is discharged into the jug 1 in use. The cartridge seat chamber bottom wall 12 and the cartridge seat chamber side wall 10 are otherwise impermeable to liquid in the illustrated embodiment. Multiple ridges 14a,b are provided in the opening at the axial end of the hollow protruding part 13 distal to the surrounding section of the cartridge seat chamber bottom wall 12. These ridges 14a,b define slits 15a,b (Fig. 4) between them that allow liquid to pass, in use. Thus, even if the central opening on which the ridges 14a,b border is blocked, liquid can still leave the cartridge seat chamber. In an alternative embodiment, there may be only one ridge 14 interrupted at one position to define a single slit 15. In the illustrated embodiment, however, there are two slits 15a,b, aligned with the major axis of the elongated shape of the cartridge seat cross-section.

The cartridge seat chamber side wall 10 is provided on its inside surface with guide ridges 16a-d that protrude into the cartridge seat chamber. These guide ridges 16a-d are provided on sides of the cartridge seat corresponding to narrow ends of the elongated shape of the cartridge-seat cross-sections and mouth. A first pair of guide ribs 16a,b is provided on one side and a second pair of guide ribs 16c,d is provided on the opposite sides. With respect to a plane through the cartridge seat axis 8 and a minor axis of the elongated shape cutting the cartridge seat chamber side wall 10 in two halves, the pairs are each other's mirror image, the plane forming a plane of symmetry. The same is true for the guide ribs 16a-d of each pair with respect to a plane through the cartridge seat axis 8 and a major axis of the elongated shape cutting the cartridge seat chamber side wall 10 in two halves. The guide ribs 16a-d forming a pair are thus offset by an equal distance in opposite directions with respect to this plane. As a result, a third guide rib 16c is displaced by 180° along the circumference of the cartridge seat chamber with respect to a first guide rib 16a. A fourth guide rib 16d is displaced by 180° with respect to a second guide rib 16b.

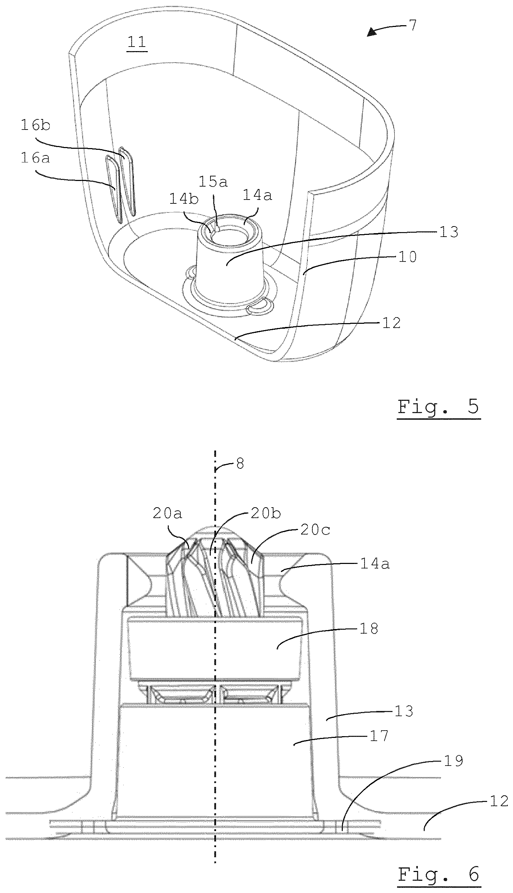

A valve (Fig. 6) is provided in the channel defined by the hollow protruding part 13. The valve has two components, namely a valve body 17 and a movable valve component 18. The movable valve component 18 is journalled for rotation about the cartridge seat axis 8 in this example. It is also able to move in axial direction within a limited range with respect to the valve body 17. At least the movable valve component 18 is made of a material having a density larger than that of the liquid to be treated, e.g. water, so that it does not float when submerged in the liquid.

The valve body 17 has a radially outward-facing surface that forms in shape to the inside surface of the hollow protruding part 13. The valve body 17 is joined to the hollow protruding part 13 and/or to the cartridge seat chamber bottom wall 12, e.g. by being bonded thereto. The bond may be an adhesive bond, for example. The movable valve component 18 is a loose component. Its range of movement is restricted by the ridges 14a,b on the inside surface of the hollow protruding part 13 and by the valve body 17. A valve body flange 19 limits the extent to which the valve body 17 can be inserted into the hollow protruding part 13. Also, the valve body flange 19 can contribute to preventing the passage of liquid between the hollow protruding part 13 and the valve body 17.

An actuating part of the movable valve component 18 is situated at an axial end distal to the valve body 17 and includes a series of helical grooves 20a-c. The grooves 20a-c are each open at an end closest to the axial end of the movable valve component 18 distal to the valve body 17 to allow a follower or other engagement element of a valve actuating device to enter the groove 20a-c. The helical grooves 20a-c widen towards their axially open ends to facilitate such entry. When this happens, the movable valve component 18 is rotated. This and contacting inclined planes via which the valve body 17 supports the movable valve component 18 cause the latter to be lifted out of a valve seat defined in the valve body 17. The flow of liquid through the valve is thereby increased. In the lifted position, the movable valve component 18 also exerts an axially directed force opposing axial movement of the valve actuating device. In the illustrated embodiment, the liquid treatment cartridge 9 includes a suitable valve actuating device, as will be explained, so that the valve helps retain the liquid treatment cartridge 9 in the cartridge seat.

The liquid treatment cartridge 9 (Fig. 7) includes a housing including a vessel-shaped housing part 21 and a cap-shaped housing part 22. The cap-shaped housing part 22 closes the vessel-shaped housing part 21 at an open end thereof such that they both enclose a cartridge chamber.

A liquid treatment part is provided in the cartridge chamber. The liquid treatment part may include a bed of granular liquid treatment medium. The granular liquid treatment medium may include a material for the treatment of liquid contacting it by a diffusive process, e.g. sorption (including ion exchange) or elution. In a particular example, the material includes material for the treatment of liquid by sorption, e.g. at least one of material for the treatment of liquid by ion exchange and material for adsorption or absorption of at least one of heavy metals and organic contaminants. The material for the treatment of liquid by ion exchange may include ion exchange resin, e.g. cation exchange resin in the hydrogen form. Weakly acidic cation exchange resin in the hydrogen form has a relatively high capacity per unit volume. Some of the granular liquid treatment medium may be impregnated and/or coated with an oligodynamic substance.

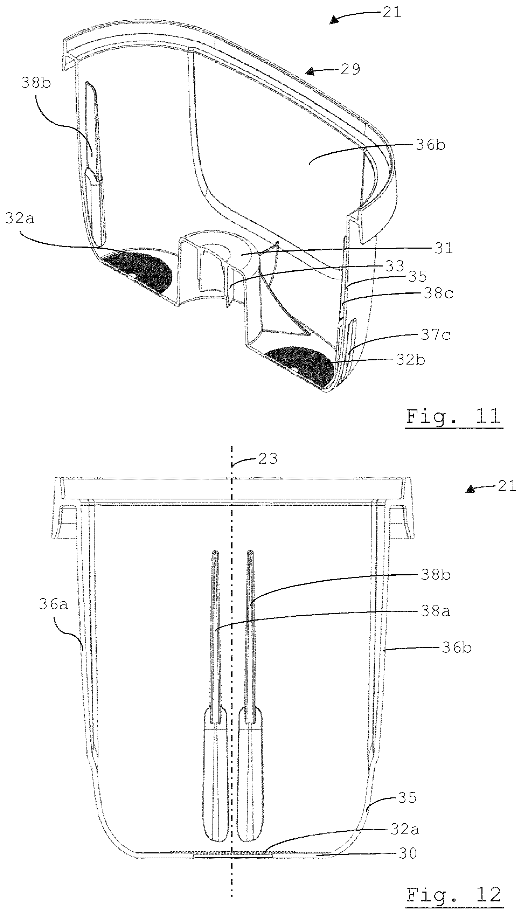

It is possible to define a reference axis 23 (Figs. 11,12), referred to here as the cartridge axis, which is essentially aligned with the cartridge seat axis 8 when the liquid treatment cartridge 9 has been inserted correctly into the cartridge seat. The cartridge axis 23 is a body axis of at least the vessel-shaped housing part 21, in this example a body axis of the housing of the liquid treatment cartridge 9.

In the illustrated embodiment, the liquid treatment cartridge 9 is inserted downwards into the cartridge seat. The cap-shaped housing part 22 thus defines a trailing axial end of the cartridge housing. The cap-shaped housing part 22 is a single injection-moulded housing part. It includes a central dome 24 and a flange 25. Liquid-permeable windows 26a,b forming inlets are provided at the level of the flange 25. Venting apertures 27a,b are provided in the dome 24. A mesh (not shown) may be interposed between the cap-shaped housing part 22 and the vessel-shaped housing part 21 in order to prevent any egress of granular liquid treatment medium from the chamber defined in the liquid treatment cartridge 9. Pull-rings 28a,b are provided to facilitate removal of the liquid treatment cartridge 9 from the cartridge seat when the treatment capacity of the liquid treatment medium has been exhausted or a maximum lifetime of the liquid treatment cartridge (e.g. based on microbiological considerations) has been reached.

The vessel-shaped housing part 21 is a moulded, e.g. injection-moulded, part. It includes an integral sealing rim 29 at the axial end that is closed by the cap-shaped housing part 22. This is the axially trailing end with respect to the direction of insertion into the cartridge seat.

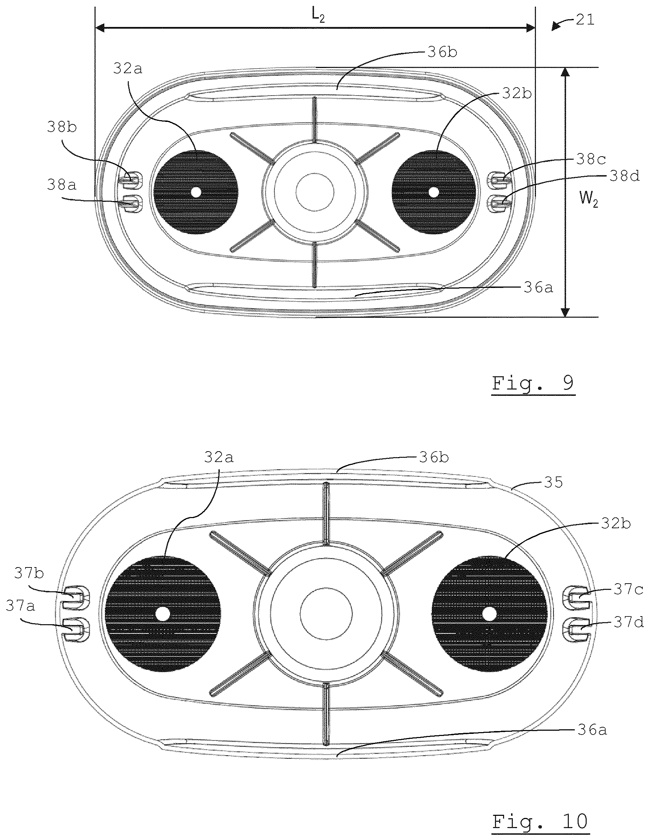

Like the rest of the vessel-shaped housing part 21, the sealing rim 29 has a generally oval shape, seen along the axis 23, with a width W₂ and a length L₂ (Fig. 9).

The vessel-shaped housing part 21 has a cartridge bottom wall 30 at an opposite axial end. An indentation 31 in the cartridge bottom wall 30 forms a recess with respect to surrounding section of an outer surface of the cartridge bottom wall 30. This surrounding surface is flat to enable the liquid treatment cartridge 9 to be placed onto a support surface without falling over. Liquid-permeable windows 32a,b forming outlets are defined in the cartridge bottom wall 30 adjacent the indentation 31. The windows 32a,b include a lattice structure for retaining any granular liquid treatment medium in the chamber defined by the vessel-shaped housing part 21 and the cap-shaped housing part 22.

A protrusion 33 protrudes into the recess from a wall section of the indentation opposite a mouth of the recess. In the illustrated embodiment, the protrusion 33 is completely contained within the recess. This also allows the liquid treatment cartridge 9 to be placed on a support surface without falling over. Moreover, the liquid treatment cartridge 9 can be packaged in foil more easily without risk of rupture of the foil packaging in transit. Furthermore, the vessel-shaped housing part 21 can be placed in a stack of similar vessel-shaped housing parts 21 more easily.

The protrusion 33 is hollow. It is arranged to receive the actuating part of the movable valve component 18 when the liquid treatment cartridge 9 is inserted into the cartridge seat. The illustrated embodiment has a generally cylindrical shape, except that this shape is interrupted at the free axial end by slits allowing the protrusion 33 to be compressed radially more easily. The outer diameter of the protrusion 33 allows it to be inserted into the hollow protruding part 13 of the cartridge seat. It may contact the ridges 14a,b in the process, indeed be compressed to provide a friction-fit. In an alternative embodiment, a bead may be provided on the outer surface of the protrusion 33, which snaps behind the ridges 14a,b.

The diameter of the recess defined by the indentation 31 is such that the hollow protruding part 13 can be received in the recess with space to spare for liquid. Thus, in use, the liquid passes out of the liquid-permeable windows 32a,b and then upwards between a side wall of the recess and the hollow protruding part 13 to enter the latter via the slits 15a,b between the ridges 14a,b.

Protruding screw thread sections 34 (Fig. 12) are provided on an interior surface of the protrusion 33. These form a screw drive mechanism with the helical grooves 20a-c to operate the valve when the liquid treatment cartridge 9 is inserted and retracted from the cartridge seat. There are fewer screw thread sections 34 than there are helical grooves 20a-c in this embodiment. The screw thread sections 34, like the protrusion 33, are centred on the cartridge axis 23. As explained, they may exert an additional axially directed force holding the liquid treatment cartridge 9 in the cartridge seat, once inserted.

The vessel-shaped housing part 21 further includes a cartridge side wall 35, closed on itself about the cartridge axis 23. At axial locations between the sealing rim 29 and the cartridge bottom wall 30, the vessel-shaped housing part 21 has an elongated cross-section in a cross-sectional plane perpendicular to the cartridge axis 23. The shape is rounded, e.g. generally oval, with two axes of symmetry. Like the rest of the cartridge housing and the cartridge seat, the shape is two-fold rotationally symmetric with respect to the cartridge axis 23, so that the liquid treatment cartridge 9 can be placed in the cartridge seat in either of two orientations separated by 180°.

The cartridge side wall 35 is provided with an outwards bulge 36a,b on each longer side of the cartridge side wall 35.

Indentations forming externally accessible guide grooves 37a-d are provided in the sides of the cartridge side wall 35 corresponding to the narrow ends of the elongated cross-sectional shape. This allows for more space between the indentation 31 in the cartridge bottom wall 30 and the cartridge side wall 35 than would be the case if they were to be defined in the sides corresponding to the wider ends of the cartridge side wall 35. Moreover, the sides corresponding to the narrow ends are less prone to warping when injection-moulded. The guide grooves 37a-d can thus be positioned and dimensioned relatively accurately.

The guide grooves 37a-d are arranged to receive the guide ribs 16a-d when the liquid treatment cartridge 9 is inserted into the cartridge seat. The guide grooves 37a-d extend in axial direction to ensure that the cartridge axis 23 is aligned with the cartridge seat axis 8. The guide grooves 37a-d are provided in an axially leading, i.e. lower, section of the cartridge side wall 35 with respect to the direction of insertion. However, they need not extend all the way to the axial end of the housing of the liquid treatment cartridge 9, i.e. the transition to the cartridge bottom wall 30.

The indentations defining the externally accessible guide grooves 37a-d define bulges on the inside of the cartridge side wall 35, which are slightly wider than the guide grooves 37a-d. Stacking ribs 38a-d are aligned with the bulges but offset in axial direction towards the opening of the vessel-shaped housing part 21 that is closable by the cap-shaped housing part 22. The stacking ribs 38a-d are thus able to enter the guide grooves 37a-d of a further vessel-shaped housing part 21, when the latter is placed on the vessel-shaped housing part 21 in a stack. This would typically occur when the vessel-shaped housing part 21 is transported from an injection-moulding machine with which it was produced to a location at which it is filled with granular liquid treatment medium and assembled with the cap-shaped housing part 22. Each higher vessel-shaped housing part 21 rests on axial ends of the bulges formed by the indentations defining the guide grooves 37a-d, with the stacking ribs 38a-d ensuring that the stack is straight. The vessel-shaped housing parts 21 can thus be taken from the stack relatively easily.

Indentations defining first and second guide grooves 37a,b are provided on one side of vessel-shaped housing part 21 corresponding to a narrow end of the oval cross-sectional shape. Indentations defining third and fourth guide grooves 37c,d are provided on an opposite side of vessel-shaped housing part 21 corresponding to a narrow end of the oval cross-sectional shape. A plane of symmetry through the cartridge axis 23 and from the one to the other narrow end cuts the vessel-shaped housing part 21 into two halves. The first guide groove 37a and the second guide groove 37b are offset by equal distances in opposite directions with respect to this plane of symmetry. The same holds true for the third and fourth guide grooves 37c,d, the distances being equal for all four guide grooves 37a-d. The distance is smaller than half the width W₂ of the vessel-shaped housing part 21. The arrangement in pairs allows for better stacking even if the stacking ribs 38 a-d are narrower than the guide grooves 37a-d, since the cartridge bottom wall 30 rests on the axial ends of multiple bulges formed by the indentations forming the guide grooves 37a-d. The symmetry also makes the vessel-shaped housing part 21 easier to produce by injection-moulding.

A second plane of symmetry through the cartridge axis 23 and perpendicular to the first plane of symmetry also cuts the vessel-shaped housing part 21 into two halves. The first and second guide grooves 37a,b are the mirror image of the third and fourth guide grooves 37c,d with respect to this second plane of symmetry. The symmetry with respect to both the first and the second planes allows the liquid treatment cartridge 9 to be rotated by 180° about the cartridge axis 23 and still fit the cartridge seat.

The guide grooves 37a-d and guide ribs 16 a-d function to align the cartridge axis 23 with the cartridge seat axis 8 prior to the sealing rim 29's contacting the sealing surface 11, since the guide grooves 37a-d are provided in an axially leading section of the cartridge side wall 35. The sealing rim 29 only functions to provide the seal. In the illustrated embodiment, the sealing rim 29 also helps to align the cap-shaped housing part 22 in the manufacturing process.

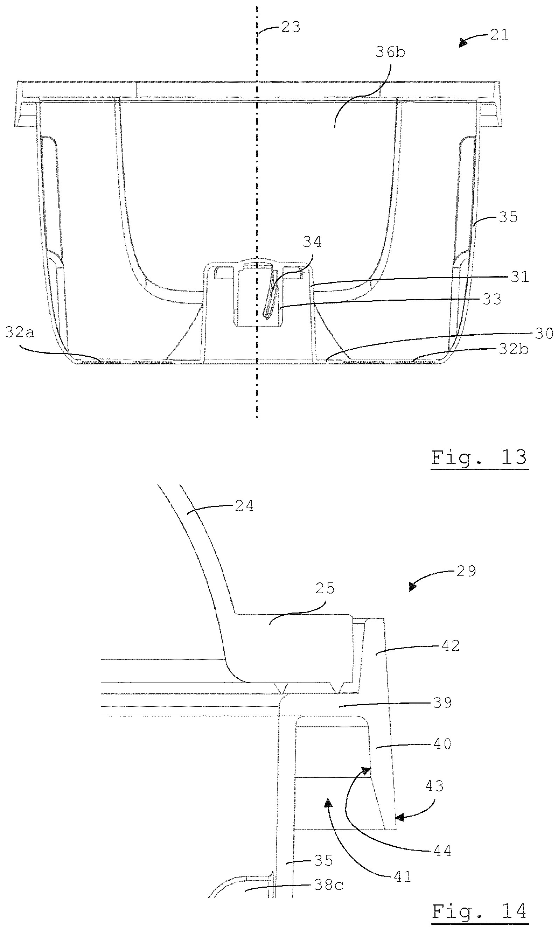

The sealing rim 29 of the example is provided right at the axially trailing end of the cartridge side wall 35 in the example. The sealing rim includes a flange-shaped section 39 protruding outwards with respect to an adjacent section of the cartridge side wall 35 (Fig. 14).

The cap-shaped housing part 22 and the vessel-shaped housing part 21 are joined together at the flange 25 and flange-shaped section 39, e.g. by adhesive bonding or welding.

A depending section 40 of the sealing rim 29 is provided at the outer edge of the flange-shaped-section 39 and protrudes in a mainly axial direction from an axially leading side of the flange-shaped section 39. There is thus defined a space 41 between the cartridge side wall 35 and the depending section 40, into which the depending section 40 can flex on contact with the sealing surface 11. The depending section 40 is relatively flexible, also because it tapers towards its axially leading edge. The flange-shaped section 39 is relatively rigid. Indeed, it is reinforced by the flange 25.

An upstanding section 42 of the sealing rim 29 is also provided at the outer edge of the flange-shaped section 39. It protrudes in a mainly axial direction from an axially trailing side of the flange-shaped section 39. The upstanding section 42 serves to align the cap-shaped housing part 22 with the vessel-shaped housing part 21. It also helps collect the liquid to be treated so as to lead it to the liquid-permeable windows 26a-b forming inlets when the reservoir 2 is nearly empty.

An outward facing surface 43 of the sealing rim 29 is constituted by an outward-facing surface of the depending section 40 of the flange-shaped section 39 and of the upstanding section 42, which are contiguous surfaces so that the one transitions into the other. Indeed, the entire outward-facing surface 43, barring possibly rounded or chamfered axial edges thereof, is unifacial. There are no edges between contiguous surface sections.

In the illustrated embodiment, the outward-facing surface 43 is straight, seen in any cross-sectional plane parallel to or through the cartridge axis 23 and perpendicular to the sealing rim 29.

The outward-facing surface 43 is inclined with respect to the cartridge axis 23 such as to flare outwards towards the axially leading edge (corresponding to the edge of the depending section 40 distal to the flange-shaped section 39). The angle of inclination is between 1° and 5°. The inclination increases the angle over which the depending section 40 can flex inwards into the space 41. The outwardly directed inclination means that the sealing rim 29 cannot function to align the cartridge axis 23 with the cartridge seat axis 8, but this is not required, as explained. Because the flange-shaped section 39 is relatively stiff and reinforced by the flange 25 of the cap-shaped housing part 22, the depending section 40 flexes so as to pivot about the outer edge of the flange-shaped section 39. It conforms to the sealing surface 11 in the process.

An inward-facing surface 44 of the depending section 40 faces the cartridge side wall 35 and is also inclined. A section proximal to the flange-shaped section 39 of the sealing rim 29 has a smaller angle of inclination than a section distal thereto and extending to the axially leading edge of the depending section 40. Both angles of inclination are such that the space 41 between the depending section 40 and the cartridge side wall 35 widens towards the axially leading edge of the depending section 40. This makes the vessel-shaped housing part 21 easier to manufacture by injection-moulding and increases the degree to which the section of the outward-facing surface 43 constituted by the outward-facing surface of the depending section 40 can conform to the sealing surface 11.

The invention is not limited to the embodiments described above, which may be varied within the scope of the accompanying claims. For example, the upstanding section 42 of the sealing rim 29 may be omitted. In the illustrated embodiment, the stacking ribs 38 a-d join the indentations forming the guide grooves 37a-d, but there may alternatively be a space between them.

### List of reference numerals

- 1 -: jug
- 2 -: reservoir
- 3 -: reservoir ridge
- 4 -: lid
- 5 -: closure element
- 6 -: pouring spout
- 7 -: appendage
- 8 -: cartridge seat axis
- 9 -: cartridge
- 10 -: cartridge seat chamber side wall
- 11 -: sealing surface
- 12 -: cartridge seat chamber bottom wall
- 13 -: hollow protruding part
- 14a,b -: ridges inside hollow protruding part
- 15a,b -: slits
- 16a-d -: guide ribs
- 17 -: valve body
- 18 -: movable valve component
- 19 -: flange on valve body
- 20a-c -: helical grooves a-c
- 21 -: vessel-shaped housing part
- 22 -: cap-shaped housing part
- 23 -: cartridge axis
- 24 -: dome
- 25 -: flange on cap-shaped housing part
- 26a,b -: liquid-permeable windows forming inlets
- 27a,b -: venting apertures
- 28a,b -: pull rings
- 29 -: sealing rim
- 30 -: cartridge bottom wall
- 31 -: indentation
- 32a,b -: liquid-permeable windows forming outlets
- 33 -: protrusion on cartridge
- 34 -: screw thread section
- 35 -: cartridge side wall
- 36a,b -: bulges
- 37a-d -: guide grooves
- 38a-d -: stacking ribs
- 39 -: flange-shaped sealing rim section
- 40 -: depending sealing rim section
- 41 -: space between depending section and cartridge side wall
- 42 -: upstanding sealing rim section
- 43 -: outward-facing sealing rim surface
- 44 -: inward-facing surface of depending section

## Claims

1. Liquid treatment cartridge including a housing of which at least a part is insertable into a cartridge seat through a mouth of the cartridge seat,
wherein the housing has an axis (23) corresponding to an intended direction of insertion of at least part of the housing into the cartridge seat,
wherein an axially leading section of the housing has a side wall (35) including a respective member (37a-d) of each of at least one pair of a guide groove (37) and a set of at least one protrusion (16) in the form of a rib extending mainly in axial direction, receivable in the guide groove during insertion of the liquid treatment cartridge into a cartridge seat having a side wall extending mainly in axial direction from the mouth and including the other member (16) of each pair,
wherein at least the axially leading section of the housing has an elongated cross-section in a cross-sectional plane perpendicular to the axis (23),
wherein at least one of sides of the housing corresponding to narrow ends of the elongated shape is provided with the member (37a-d) of at least one of the pairs,
wherein the housing includes a circumferential sealing rim (29) axially at a distance to the members (37a-d) of the at least one pair with which the side wall (35) is provided,
wherein the sealing rim (29) includes a section (39) protruding outwards from a remainder (35) of the housing and a further section (40) protruding in a mainly axial direction from an axially leading side of the section (39) protruding outwards,
wherein the further section (40) is flexible inwards on contact with a sealing surface (11) of the cartridge seat to conform to the sealing surface (11) of the cartridge seat,
wherein an outward-facing surface of at least the further section (40) of the sealing rim (29) is unifacial, and
wherein the outward-facing surface is inclined with respect to the axis (23) such as to flare outwards towards an edge thereof distal to the section (39) from which the further section (40) protrudes.

2. Liquid treatment cartridge according to claim 1,
wherein the further section (40) is provided at an outer edge of the section (39) protruding outwards, such that the outward-facing surface of the further section (40) transitions into an end face of the section (39) protruding outwards.

3. Liquid treatment cartridge according to claim 1 or 2,
wherein the outward-facing surface (43) of the sealing rim (29) is unifacial.

4. Liquid treatment cartridge according to any one of the preceding claims,
wherein the sealing rim (29) includes a section (42) protruding in a mainly axial direction from an axially trailing side of the section (39) protruding outwards.

5. Liquid treatment cartridge according to any one of the preceding claims,
wherein the section (39) protruding outwards forms a flange of a first housing part (21), and
wherein the housing includes a second housing part (22), provided with a flange (25) and joined to the first housing part (21) at the flanges (25,39).

6. Liquid treatment cartridge according to any one of the preceding claims,
wherein an inward-facing surface (44) of the further section (40) includes at least a section at an edge distal to the section (39) from which the further section (40) protrudes that is inclined with respect to the axis (23) such as to flare outwards towards the distal edge.

7. Liquid treatment cartridge according to any one of the preceding claims,
wherein the side wall (35) is provided with an, e.g. outwards, bulge (36) on at least one longer side of the housing.

8. Liquid treatment cartridge according to any one of the preceding claims,
wherein the housing is provided with the guide groove (37a-d) of at least one, e.g. each, of the pairs.

9. Liquid treatment cartridge according to claim 8,
wherein the guide groove (37a-d) is formed as an indentation in the side wall (35).

10. Liquid treatment cartridge according to any one of the preceding claims,
wherein a plane through the axis (23) and cutting at least a housing part (21) including the side wall (35) in two halves intersects the side wall (35) at opposite locations, and
wherein a member (37) of a first of the pairs is provided at a position offset with respect to one of the locations to one side of the plane and a member (37) of a second of the pairs is provided at a position offset with respect to one of the locations to an opposite side of the plane.

11. Liquid treatment cartridge according to any one of the preceding claims,
wherein a wall (30) at an axially leading end of the housing includes an indentation (31) forming a recess with respect to a surrounding section of an outer surface of the wall (30).

12. Liquid treatment cartridge according to claim 11,
wherein the housing includes a protrusion (33) protruding into the recess in a mainly axial directionfor engaging the cartridge seat to exert an axial holding force on the cartridge when inserted into the seat.

13. Liquid treatment cartridge according to claim 12,
wherein the protrusion (33) is centred with respect to an axis (23) that is at least parallel to the cartridge axis (23) and with respect to which the sealing rim (29) is centred.

14. Liquid treatment cartridge according to claim 12 or 13,
wherein the protrusion (33) is a hollow part, open at an axially leading end and provided with at least one protruding part (34) on an interior surface.

15. Liquid treatment system, including:
a replaceable liquid treatment cartridge (9) according to any one of the preceding claims; and
a barrier (2) for separating an upstream section of the liquid treatment system from a downstream section,
wherein the barrier is provided with a cartridge seat for receiving the liquid treatment cartridge (9),
wherein the liquid treatment system includes at least one pair of a guide groove (37) and a set of at least one protrusion (16) receivable in the guide groove (37) during insertion of at least part of the liquid treatment cartridge housing into the cartridge seat,
wherein the cartridge seat is provided with one member (16a-d) of each pair and an axially leading section of the housing of the liquid treatment cartridge (9) has a side wall (35) provided with the other member (37a-d),
wherein the cartridge seat includes a sealing surface (11), closed on itself about a cartridge seat axis (8), for co-operating with the sealing rim (29), and
wherein the members of the pairs are configured to align the cartridge seat axis (8) with the axis (23) of the housing of the liquid treatment cartridge (9) on insertion of the at least part of the liquid treatment cartridge housing into the cartridge seat before the sealing rim (29) engages the sealing surface (11), so as to avoid that the sealing rim (29) aligns the cartridge axis (23) and the cartridge seat axis (8).

16. Method of placing a liquid treatment cartridge (9) according to any one of claims 1-14 in a cartridge seat,
wherein the liquid treatment cartridge (9) and the cartridge seat are comprised in a liquid treatment system including at least one pair of a guide groove (37) and a set of at least one protrusion (16) receivable in the guide groove (37) during insertion of at least part of the liquid treatment cartridge housing into the cartridge seat,
wherein the cartridge seat is provided with one member (37a-d) of each pair and an axially leading section of the housing of the liquid treatment cartridge has a side wall (35) provided with the other member (37a-d),
wherein the cartridge seat includes a sealing surface (11), closed on itself about a cartridge seat axis (8), for co-operating with the sealing rim (29), and
wherein the pairs of a guide groove (37) and a set of at least one protrusion (16) receivable in the guide groove (37) are used instead of the sealing rim (29) to align the cartridge axis (23) and the cartridge seat axis (8).

## Patentansprüche

1. Flüssigkeitsbehandlungskartusche, die ein Gehäuse beinhaltet, von dem mindestens ein Teil durch eine Öffnung eines Kartuschensitzes in den Kartuschensitz einführbar ist,
wobei das Gehäuse eine Achse (23) aufweist, die einer beabsichtigten Einführrichtung mindestens eines Teils des Gehäuses in den Kartuschensitz entspricht,
wobei ein axial führender Abschnitt des Gehäuses eine Seitenwand (35) aufweist, die ein jeweiliges Element (37a-d) von jedem von mindestens einem Paar von Führungsnuten (37) und einem Satz von mindestens einem Vorsprung (16) in Form einer sich hauptsächlich in axialer Richtung erstreckenden Rippe beinhaltet, die beim Einführen der Flüssigkeitsbehandlungskartusche in einen Kartuschensitz mit einer sich hauptsächlich in Axialrichtung von der Öffnung erstreckenden Seitenwand und die das andere Element (16) jedes Paares beinhaltet, in der Führungsnut aufnehmbar ist,
wobei zumindest der axial führende Abschnitt des Gehäuses einen länglichen Querschnitt in einer zur Achse (23) senkrechten Querschnittsebene aufweist,
wobei mindestens eine von Seiten des Gehäuses, die schmalen Enden der länglichen Form entsprechen, mit dem Element (37a-d) mindestens eines der Paare versehen ist,
wobei das Gehäuse einen umlaufenden Dichtungsring (29) axial in einem Abstand zu den Elementen (37a-d) des mindestens einen Paares beinhaltet, mit dem die Seitenwand (35) versehen ist,
wobei der Dichtungsring (29) einen Abschnitt (39) beinhaltet, der von einem Rest (35) des Gehäuses nach außen vorragt, und einen weiteren Abschnitt (40), der in im Wesentlichen Axialrichtung von einer axial führenden Seite des nach außen vorragenden Abschnitts (39) vorragt,
wobei der weitere Abschnitt (40) bei Kontakt mit einer Dichtungsfläche (11) des Kartuschensitzes nach innen flexibel ist, um sich der Dichtungsfläche (11) des Kartuschensitzes anzupassen,
wobei eine nach außen weisende Oberfläche zumindest des weiteren Abschnitts (40) des Dichtungsringes (29) einseitig ist, und
wobei die nach außen weisende Oberfläche gegenüber der Achse (23) so geneigt ist, dass sie sich nach außen zu einer Kante distal zu dem Abschnitt (39) ausweitet, von der der weitere Abschnitt (40) herausragt.

2. Flüssigkeitsbehandlungskartusche nach Anspruch 1,
wobei der weitere Abschnitt (40) an einer Außenkante des nach außen vorragenden Abschnitts (39) vorgesehen ist, sodass die nach außen weisende Oberfläche des weiteren Abschnitts (40) in eine Stirnfläche des nach außen vorragenden Abschnitts (39) übergeht.

3. Flüssigkeitsbehandlungskartusche nach Anspruch 1 oder 2,
wobei die nach außen weisende Oberfläche (43) des Dichtungsringes (29) einseitig ist.

4. Flüssigkeitsbehandlungskartusche nach einem der vorstehenden Ansprüche,
wobei der Dichtungsring (29) einen Abschnitt (42) beinhaltet, der in überwiegend Axialrichtung von einer axial nachlaufenden Seite des nach außen vorragenden Abschnitts (39) vorragt.

5. Flüssigkeitsbehandlungskartusche nach einem der vorstehenden Ansprüche,
wobei der nach außen vorragende Abschnitt (39) einen Flansch eines ersten Gehäuseteils (21) bildet und
wobei das Gehäuse einen zweiten Gehäuseteil (22) beinhaltet, der mit einem Flansch (25) versehen ist und an den Flanschen (25, 39) mit dem ersten Gehäuseteil (21) verbunden ist.

6. Flüssigkeitsbehandlungskartusche nach einem der vorstehenden Ansprüche,
wobei eine nach innen weisende Oberfläche (44) des weiteren Abschnitts (40) mindestens einen Abschnitt an einer Kante distal zu dem Abschnitt (39) beinhaltet, von dem der weitere Abschnitt (40) vorragt und der in Bezug auf die Achse (23) so geneigt ist, dass er sich nach außen zur distalen Kante hin ausweitet.

7. Flüssigkeitsbehandlungskartusche nach einem der vorstehenden Ansprüche,
wobei die Seitenwand (35) an mindestens einer längeren Seite des Gehäuses mit einer z. B. nach außen gerichteten Ausbuchtung (36) versehen ist.

8. Flüssigkeitsbehandlungskartusche nach einem der vorstehenden Ansprüche,
wobei das Gehäuse mit der Führungsnut (37a-d) mindestens eines, z. B. jedes, der Paare versehen ist.

9. Flüssigkeitsbehandlungskartusche nach Anspruch 8,
wobei die Führungsnut (37a-d) als eine Vertiefung in der Seitenwand (35) gebildet ist.

10. Flüssigkeitsbehandlungskartusche nach einem der vorstehenden Ansprüche,
wobei eine Ebene durch die Achse (23), die mindestens einen Gehäuseteil (21) einschließlich der Seitenwand (35) in zwei Hälften teilt, die Seitenwand (35) an gegenüberliegenden Stellen schneidet, und
wobei ein Element (37) eines ersten der Paare an einer Position vorgesehen ist, die gegenüber einer der Stellen auf der einen Seite der Ebene versetzt ist, und ein Element (37) eines zweiten der Paare an einer Position vorgesehen ist, die gegenüber einer der Stellen auf einer gegenüberliegenden Seite der Ebene versetzt ist.

11. Flüssigkeitsbehandlungskartusche nach einem der vorstehenden Ansprüche,
wobei eine Wand (30) an einem axial führenden Ende des Gehäuses eine Vertiefung (31) beinhaltet, die eine Aussparung in Bezug auf einen umgebenden Abschnitt einer Außenfläche der Wand (30) bildet.

12. Flüssigkeitsbehandlungskartusche nach Anspruch 11
wobei das Gehäuse einen Vorsprung (33) beinhaltet, der in einer im wesentlichen Axialrichtung in die Aussparung vorragt, um mit dem Kartuschensitz in Eingriff zu stehen und beim Einführen in den Sitz eine axiale Haltekraft auf die Kartusche auszuüben.

13. Flüssigkeitsbehandlungskartusche nach Anspruch 12,
wobei der Vorsprung (33) mittig auf einer Achse (23) angeordnet ist, die mindestens parallel zur Kartuschenachse (23) verläuft und in Bezug auf die der Dichtungsring (29) mittig angeordnet ist.

14. Flüssigkeitsbehandlungskartusche nach Anspruch 12 oder 13,
wobei der Vorsprung (33) ein Hohlkörper ist, der an einem axial führenden Ende offen ist und an einer Innenfläche mit mindestens einen vorragenden Teil (34) versehen ist.

15. Flüssigkeitsbehandlungssystem, beinhaltend:
eine austauschbare Flüssigkeitsbehandlungskartusche (9) nach einem der vorstehenden Ansprüche; und
eine Barriere (2) zum Trennen eines stromaufwärts gelegenen Abschnitts des Flüssigkeitsbehandlungssystems von einem stromabwärts gelegenen Abschnitt,
wobei die Barriere mit einem Kartuschensitz zum Aufnehmen der Flüssigkeitsbehandlungskartusche (9) versehen ist,
wobei das Flüssigkeitsbehandlungssystem mindestens ein Paar Führungsnuten (37) und einen Satz von mindestens einem Vorsprung (16) beinhaltet, der beim Einführen mindestens eines Teils des Flüssigkeitsbehandlungskartuschengehäuses in den Kartuschensitz in der Führungsnut (37) aufnehmbar ist,
wobei der Kartuschensitz mit einem Element (16a-d) jedes Paares versehen ist und ein axial führender Abschnitt des Gehäuses der Flüssigkeitsbehandlungskartusche (9) eine Seitenwand (35) aufweist, die mit dem anderen Element (37a-d) versehen ist,
wobei der Kartuschensitz eine Dichtungsfläche (11) beinhaltet, die um eine Kartuschensitzachse (8) geschlossen ist und mit dem Dichtungsrand (29) zusammenwirkt, und
wobei die Elemente der Paare so konfiguriert sind, dass die Kartuschensitzachse (8) mit der Achse (23) des Gehäuses der Flüssigkeitsbehandlungskartusche (9) ausgerichtet wird, wenn mindestens ein Teil des Flüssigkeitsbehandlungskartuschengehäuses in den Kartuschensitz eingesetzt wird, bevor der Dichtungsrand (29) mit der Dichtungsfläche (11) in Eingriff steht, um zu vermeiden, dass der Dichtungsrand (29) die Kartuschenachse (23) und die Kartuschensitzachse (8) ausrichtet.

16. Verfahren zum Einführen einer Flüssigkeitsbehandlungskartusche (9) nach einem der Ansprüche 1-14 in einen Kartuschensitz,
wobei die Flüssigkeitsbehandlungskartusche (9) und der Kartuschensitz in einem Flüssigkeitsbehandlungssystem umfasst sind, das mindestens ein Paar Führungsnuten (37) und einen Satz von mindestens einem Vorsprung (16) beinhaltet, der beim Einführen mindestens eines Teils des Flüssigkeitsbehandlungskartuschengehäuses in den Kartuschensitz in der Führungsnut (37) aufnehmbar ist,
wobei der Kartuschensitz mit einem Element (37a-d) jedes Paares versehen ist und ein axial führender Abschnitt des Gehäuses der Flüssigkeitsbehandlungskartusche eine Seitenwand (35) aufweist, die mit dem anderen Element (37a-d) versehen ist,
wobei der Kartuschensitz eine Dichtungsfläche (11) beinhaltet, die um eine Kartuschensitzachse (8) geschlossen ist und mit dem Dichtungsrand (29) zusammenwirkt, und
wobei anstelle des Dichtungsringes (29) die Paare einer Führungsnut (37) und ein Satz von mindestens einem Vorsprung (16), der in der Führungsnut (37) aufnehmbar ist, verwendet werden, um die Kartuschenachse (23) und die Kartuschensitzachse (8) auszurichten.

## Revendications

1. Cartouche de traitement de liquide incluant un boîtier dont au moins une partie peut être insérée dans un siège de cartouche via une ouverture du siège de cartouche,
dans lequel le boîtier présente un axe (23) correspondant à une direction d'insertion prévue d'au moins une partie du boîtier dans le siège de cartouche,
dans lequel une section axialement d'attaque du boîtier présente une paroi latérale (35) incluant un élément respectif (37a-d) de chacune d'au moins une paire d'une rainure de guidage (37) et d'un ensemble d'au moins une saillie (16) sous la forme d'une nervure s'étendant principalement dans la direction axiale, pouvant être reçue dans la rainure de guidage lors de l'insertion de la cartouche de traitement de liquide dans un siège de cartouche présentant une paroi latérale s'étendant principalement dans la direction axiale à partir de l'ouverture et incluant l'autre élément (16) de chaque paire,
dans lequel la au moins la partie axialement d'attaque du boîtier présente une section transversale allongée dans un plan de section transversale perpendiculaire à l'axe (23),
dans lequel au moins un certain des côtés du boîtier correspondant à des extrémités étroites de la forme allongée est muni de l'élément (37a-d) d'au moins une des paires,
dans lequel le boîtier inclut un rebord d'étanchéité circonférentiel (29) axialement à une distance des éléments (37a-d) de la au moins une paire dont est munie la paroi latérale (35),
dans lequel le rebord d'étanchéité (29) inclut une section (39) faisant saillie vers l'extérieur d'un reste (35) du boîtier et une autre section (40) faisant saillie dans une direction principalement axiale depuis un côté axialement d'attaque de la section (39) faisant saillie vers l'extérieur,
dans lequel la section supplémentaire (40) est flexible vers l'intérieur au contact d'une surface d'étanchéité (11) du siège de cartouche pour se conformer à la surface d'étanchéité (11) du siège de cartouche,
dans lequel une surface orientée vers l'extérieur de la au moins la section supplémentaire (40) du rebord d'étanchéité (29) est monofaciale, et
dans lequel la surface orientée vers l'extérieur est inclinée par rapport à l'axe (23) de manière à s'évaser vers l'extérieur vers un bord de celle-ci distal par rapport à la section (39) à partir de laquelle la section supplémentaire (40) fait saillie.

2. Cartouche de traitement de liquide selon la revendication 1,
dans lequel la section supplémentaire (40) est prévue au niveau d'un bord extérieur de la section (39) faisant saillie vers l'extérieur, de telle sorte que la surface orientée vers l'extérieur de la section supplémentaire (40) se transforme en une face d'extrémité de la section (39) faisant saillie vers l'extérieur.

3. Cartouche de traitement de liquide selon la revendication 1 ou 2,
dans lequel la surface orientée vers l'extérieur (43) du rebord d'étanchéité (29) est monofaciale.

4. Cartouche de traitement de liquide selon l'une quelconque des revendications précédentes,
dans lequel le rebord d'étanchéité (29) inclut une section (42) faisant saillie dans une direction principalement axiale à partir d'un côté axialement de fuite de la section (39) faisant saillie vers l'extérieur.

5. Cartouche de traitement de liquide selon l'une quelconque des revendications précédentes,
dans lequel la section (39) faisant saillie vers l'extérieur forme une bride d'une première partie formant boîtier (21), et
dans lequel le boîtier inclut une seconde partie de boîtier (22), munie d'une bride (25) et reliée à la première partie formant boîtier (21) au niveau des brides (25, 39).

6. Cartouche de traitement de liquide selon l'une quelconque des revendications précédentes,
dans lequel une surface orientée vers l'intérieur (44) de la section supplémentaire (40) inclut au moins une section au niveau d'un bord distal à la section (39) à partir de laquelle la section supplémentaire (40) fait saillie, qui est inclinée par rapport à l'axe (23) de manière à s'évaser vers l'extérieur en direction du bord distal.

7. Cartouche de traitement de liquide selon l'une quelconque des revendications précédentes,
dans lequel la paroi latérale (35) est munie d'un renflement (36), par exemple vers l'extérieur, sur au moins un côté plus long du boîtier.

8. Cartouche de traitement de liquide selon l'une quelconque des revendications précédentes,
dans lequel le boîtier est muni de la rainure de guidage (37a-d) d'au moins une, par exemple de chacune, des paires.

9. Cartouche de traitement de liquide selon la revendication 8,
dans lequel la rainure de guidage (37a-d) est formée sous la forme d'une indentation dans la paroi latérale (35).

10. Cartouche de traitement de liquide selon l'une quelconque des revendications précédentes,
dans lequel un plan passant par l'axe (23) et coupant au moins une partie formant boîtier (21) incluant la paroi latérale (35) en deux moitiés recoupe la paroi latérale (35) à des emplacements opposés, et
dans lequel un élément (37) d'une première des paires est prévu à une position décalée par rapport à un certain des emplacements d'un certain côté du plan, et un élément (37) d'une deuxième des paires est prévu dans une position décalée par rapport à un certain des emplacements d'un côté opposé du plan.

11. Cartouche de traitement de liquide selon l'une quelconque des revendications précédentes,
dans lequel une paroi (30) au niveau d'une extrémité axialement d'attaque du boîtier inclut une indentation (31) formant un évidement par rapport à une section environnante d'une surface extérieure de la paroi (30).

12. Cartouche de traitement de liquide selon la revendication 11,
dans lequel le boîtier inclut une saillie (33) faisant saillie dans l'évidement dans une direction principalement axiale pour venir en prise dans le siège de cartouche afin d'exercer une force de maintien axiale sur la cartouche lorsqu'elle est insérée dans le siège.

13. Cartouche de traitement de liquide selon la revendication 12,
dans lequel la saillie (33) est centrée par rapport à un axe (23) qui est au moins parallèle à l'axe de cartouche (23) et par rapport auquel le rebord d'étanchéité (29) est centré.

14. Cartouche de traitement de liquide selon la revendication 12 ou 13,
dans lequel la saillie (33) est une partie creuse, ouverte à une extrémité axialement d'attaque et munie d'au moins une partie saillante (34) sur une surface intérieure.

15. Système de traitement de liquide, incluant :
une cartouche de traitement de liquide remplaçable (9) selon l'une quelconque des revendications précédentes ; et
une barrière (2) pour séparer une section amont du système de traitement de liquide d'une section aval,
dans lequel la barrière est munie d'un siège de cartouche destiné à recevoir la cartouche de traitement de liquide (9),
dans lequel le système de traitement de liquide inclut au moins une paire d'une rainure de guidage (37) et un ensemble d'au moins une saillie (16) pouvant être reçue dans la rainure de guidage (37) lors de l'insertion d'au moins une partie du boîtier de cartouche de traitement de liquide dans le siège de cartouche,
dans lequel le siège de cartouche est muni d'un élément (16a-d) de chaque paire et une section axialement d'attaque du boîtier de la cartouche de traitement de liquide (9) présente une paroi latérale (35) munie de l'autre élément (37a-d),
dans lequel le siège de cartouche inclut une surface d'étanchéité (11), fermée sur elle-même autour d'un axe de siège de cartouche (8), pour coopérer avec le rebord d'étanchéité (29), et
dans lequel les éléments des paires sont configurés pour aligner l'axe de siège de cartouche (8) avec l'axe (23) du boîtier de la cartouche de traitement de liquide (9) lors de l'insertion de la au moins une partie du boîtier de cartouche de traitement de liquide dans le siège de cartouche avant que le rebord d'étanchéité (29) ne vienne en contact avec la surface d'étanchéité (11), afin d'éviter que le rebord d'étanchéité (29) n'aligne l'axe de cartouche (23) et l'axe de siège de cartouche (8).

16. Procédé de placement d'une cartouche de traitement de liquide (9) selon l'une quelconque des revendications 1-14 dans un siège de cartouche,
dans lequel la cartouche de traitement de liquide (9) et le siège de cartouche sont compris dans un système de traitement liquide incluant au moins une paire d'une rainure de guidage (37) et un ensemble d'au moins une saillie (16) pouvant être reçue dans la rainure de guidage (37) lors de l'insertion d'au moins une partie du boîtier de cartouche de traitement de liquide dans le siège de cartouche,
dans lequel le siège de cartouche est muni d'un élément (37a-d) de chaque paire et une section axialement d'attaque du boîtier de la cartouche de traitement de liquide présente une paroi latérale (35) munie de l'autre élément (37a-d),
dans lequel le siège de cartouche inclut une surface d'étanchéité (11), fermée sur elle-même autour d'un axe de siège de cartouche (8), pour coopérer avec le rebord d'étanchéité (29), et
dans lequel les paires d'une rainure de guidage (37) et un ensemble d'au moins une saillie (16) pouvant être reçue dans la rainure de guidage (37) sont utilisés à la place du rebord d'étanchéité (29) pour aligner l'axe de cartouche (23) et l'axe de siège de cartouche (8).
